# EUROPEAN PATENT APPLICATION

(11) **EP 3 885 915 A1**
(43) Date of publication of application: **29.09.2021**
(21) Application number: 21153425.0
(22) Date of filing: 26.01.2021
(51) Int. Cl.: G06F 11/30, G06F 11/36, G06N 20/00

(54) **FAILURE CAUSE IDENTIFYING PROGRAM, FAILURE CAUSE IDENTIFYING APPARATUS, AND FAILURE CAUSE IDENTIFYING METHOD**

(30) Priority: 23.03.2020 JP 2020051630
(71) Applicant: FUJITSU LIMITED, Kanagawa 211-8588 (JP)
(72) Inventor: Fujita, Hiroshi, Kanagawa, 211-8588 (JP); Watanabe, Yukihiro, Kanagawa, 211-8588 (JP)
(74) Representative: Hoffmann Eitle

(57) **Abstract**

A failure cause identifying program that causes a computer to execute a process, the process includes extracting a first node related to a node indicating abnormality included in a plurality of nodes; identifying a first objective variable and a first explanatory variable of the first objective variable, the first objective variable being each of combinations of operation data of the first node and the first node; extracting, in a detection process performed by using the first explanatory variable, a second objective variable and a second explanatory variable of the second objective variable, the second objective variable being each of combinations of the operation data and the node indicating abnormality; determining a number of objective variables common to the second explanatory variable; and setting a priority order for locations of a cause of a failure, based on the number of objective variables.

## Description

### FIELD

The embodiment discussed herein is related to a failure cause identifying program, a failure cause identifying apparatus, and a failure cause identifying method.

### BACKGROUND

In recent years, in a computer network system, the number of elements that constitute an IT service has been increasing due to transformation of the service using containers and microservices. Along with such a situation, operation and management of Information and Communication Technology (ICT) infrastructure is becoming more complex, and efficient operation thereof is desired. Therefore, there is a technique for identifying an abnormal location when a failure occurs in a system.

As a related art, there is a technique described below. In a computer network system, failure occurrence information indicating a first device in which a failure has occurred is acquired. A plurality of second devices existing in a first influence range that starts from the first device and that may be affected by the failure are searched for. It is determined whether an abnormality is occurring in each of the plurality of second devices. Based on a result obtained by determining whether each of the second devices exists in a second influence range that starts from a third device in which the abnormality is occurring and that may be affected by the abnormality of the third device, a rank is determined for each of the plurality of second devices. Accordingly, influence ranges may be identified which make it possible to determine a difference in the degree of possibility of being affected by the failure. Devices that have not detected yet but are to be affected as well as devices that have already been affected may be searched for. The rank of being affected by the failure is determined. Consequently, the range affected by the failure may be narrowed. As a related art, Japanese Laid-open Patent Publication No. 2018-205811 is disclosed.

### SUMMARY

### [TECHNICAL PROBLEM]

The related art enables the presence or absence of an abnormality (failure) to be determined but fails to indicate a location of the cause of the failure. Therefore, each abnormal location is to be checked. This causes an issue that it takes time when there are a plurality of abnormal locations. In the related art, there is an issue that it takes time to identify a cause of a failure even when a failure influence range is narrowed and each of affected locations is checked.

In view of the above, it is desirable to make operation of ICT infrastructure more efficient by reducing the time taken for identifying the cause of the failure.

### [SOLUTION TO PROBLEM]

According to an aspect of the embodiments, a failure cause identifying program that causes a computer to execute a process, the process includes extracting a first node related to a node indicating abnormality included in a plurality of nodes; identifying a first objective variable and a first explanatory variable of the first objective variable, the first objective variable being each of combinations of operation data of the first node and the first node; extracting, in a detection process performed by using the first explanatory variable, a second objective variable and a second explanatory variable of the second objective variable, the second objective variable being each of combinations of the operation data and the node indicating abnormality; determining a number of objective variables common to the second explanatory variable; and setting a priority order for locations of a cause of a failure, based on the number of objective variables.

### BRIEF DESCRIPTION OF DRAWINGS

FIG. 1 is an explanatory diagram illustrating an example of an overview of a failure cause identifying system, a failure cause identifying method, and a failure cause identifying program according to an embodiment;
FIG. 2 is an explanatory diagram illustrating an example of a system configuration of a network system;
FIG. 3A is a block diagram illustrating an example of a hardware configuration of a management server, a network (NW) device, a database, and a server that constitute the network system;
FIG. 3B is a block diagram illustrating an example of a hardware configuration of a user terminal apparatus that constitutes the network system;
FIG. 4 is a block diagram illustrating an example of a functional configuration of the failure cause identifying system according to the embodiment;
FIG. 5 is an explanatory diagram illustrating an example of a relationship between input data ("configuration information") and output data ("related node information") of a node detection unit;
FIG. 6 is a flowchart illustrating an example of a procedure of a node detection process;
FIG. 7 is an explanatory diagram illustrating an example of a relationship between input data ("related node information") and output data ("explanatory variable selection result") of an explanatory variable selection unit;
FIG. 8 is a flowchart illustrating an example of a procedure of an explanatory variable selection process;
FIG. 9 is an explanatory diagram illustrating an example of a relationship between input data ("explanatory variable selection result") and output data ("abnormality determination result") of a just-in-time (JIT) determination unit;
FIG. 10 is a flowchart illustrating an example of a procedure of a JIT determination process;
FIG. 11 is an explanatory diagram illustrating an example of a relationship between input data ("abnormality determination result") and output data ("abnormality detected objective variable") of an abnormality detected variable extraction unit;
FIG. 12 is a flowchart illustrating an example of a procedure of an abnormality detected variable extraction process;
FIG. 13 is an explanatory diagram illustrating an example of a relationship between input data ("abnormality detected objective variable") and output data ("number of common objective variables") of a common objective variable calculation unit;
FIG. 14 is a flowchart illustrating an example of a procedure of a common objective variable calculation process;
FIG. 15 is an explanatory diagram illustrating an example of a relationship between input data ("number of common objective variables") and output data ("investigation priority") of a priority order setting unit;
FIG. 16 is a flowchart illustrating an example of a procedure of a priority order setting process; and
FIG. 17 is an explanatory diagram illustrating an example of a display screen.

### [ADVANTAGEOUS EFFECTS OF INVENTION]

In one aspect, it is possible to make operation of ICT infrastructure more efficient by reducing the time taken for identifying the cause of the failure.

### DESCRIPTION OF EMBODIMENTS

An embodiment of a failure cause identifying system, a failure cause identifying method, and a failure cause identifying program according to the present disclosure will be described in detail below with reference to the drawings.

### (Embodiment)

### (Overview of Failure Cause Identifying Process)

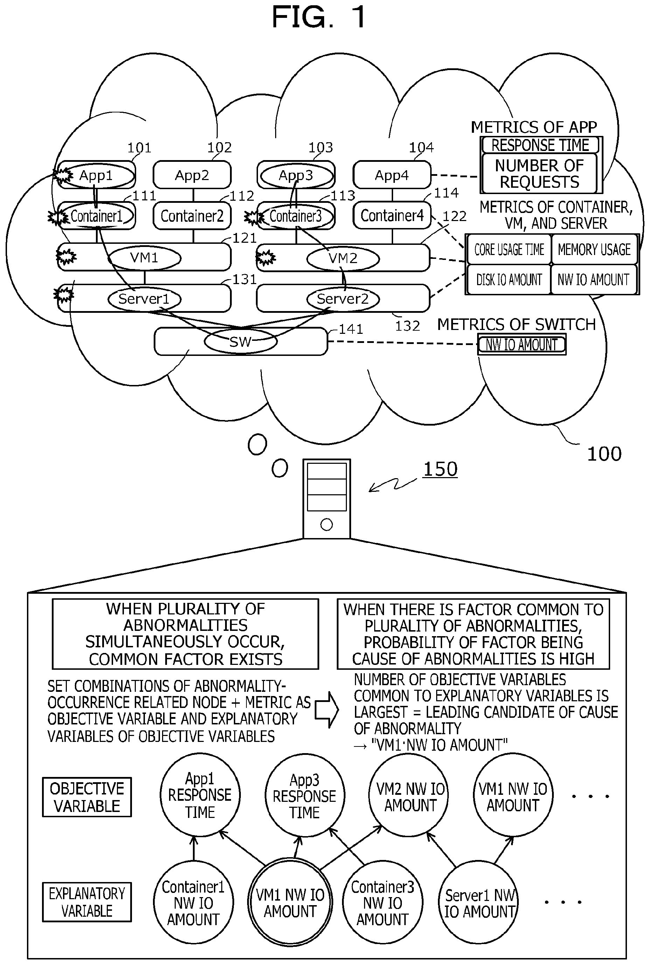

FIG. 1 is an explanatory diagram illustrating an example of an overview of a failure cause identifying system, a failure cause identifying method, and a failure cause identifying program according to an embodiment. In FIG. 1, a network system 100 includes nodes such as applications (App1 (101) to App4 (104)), containers (Container1 (111) to Container4 (114)), virtual machines (VM1 (121) and VM2 (122)), servers (Server1 (131), a Server2 (132)), and a switch (SW) 141.

"Metrics" each of which is operation data is present for each node. As illustrated in FIG. 1, the metrics of the applications (App1 (101) to App4 (104)) are, for example, a response time (of an HTTP request or the like), the number of requests, and so on. The metrics of the containers (Container1 (111) to Container4 (114)), the virtual machines (VM1 (121) and VM2 (122)), the servers (Server1 (131) and the Server2 (132)) are, for example, a core usage time, a memory usage, a disk IO (write/read) amount, a network (NW) IO (reception/transmission) amount, and so on. The metric of the switch (SW) 141 is, for example, a NW IO amount and so on. It is assumed that a location of a failure (abnormality) in the network system 100 is represented in a unit of "node + metric".

In a case where a failure (abnormality) occurs in the network system 100, a failure cause identifying system 150 identifies a cause of the failure, for example, a location of the failure in a unit of "node + metric". At that time, based on two concepts, the failure cause identifying system 150 identifies the cause of the failure. The first concept is that "when a plurality of abnormalities simultaneously occur, a common factor exists". The second concept is that "when there is a factor common to a plurality of abnormalities, the probability of the factor being the cause of the abnormalities is high".

Based on the first concept ("when a plurality of abnormalities simultaneously occur, a common factor exists"), the failure cause identifying system 150 extracts, from configuration information of the network system 100, related nodes (nodes surrounded by an ellipse in FIG. 1 (for example, nine nodes such as Container1 (111) and App3 (103)) related to nodes (nodes assigned a failure marking in FIG. 1 (for example, six nodes such as App1 (101) and Container3 (113)) in which an abnormality has occurred in the application.

The failure cause identifying system 150 sets, as "objective variables", combinations of an extracted related node and individual metrics of the related node (such as the response time, the number of requests, the NW IO amount, and the like of the corresponding node), and sets, as candidates for "explanatory variables", combinations of the other nodes and the metrics. For each of the objective variables, the failure cause identifying system 150 selects explanatory variables usable for an approximation model from among the candidates for the "explanatory variables". An "objective variable" indicates a variable desired to be predicted, for example, a result of a matter. An "explanatory variable" indicates a variable that explains an objective variable, for example, a cause of a matter. Therefore, an "objective variable" is a combination of a node related to a node in which a failure has occurred and a metrics of the related node, and an "explanatory variable" is a combination of a node serving as the cause of the failure and a metric of the node.

The failure cause identifying system 150 detects an abnormality of the objective variable. For example, the failure cause identifying system 150 performs just-in-time (JIT) determination using the selected explanatory variables and checks whether an abnormality is actually occurring. Detailed content of the JIT determination will be described later. The objective variable (a combination of a node and a metric) for which an abnormality is detected and explanatory variables (combinations of nodes and metrics) of the objective variable are detected.

Thereafter, based on the second concept ("when there is a factor common to a plurality of abnormalities, the probability of the factor being the cause of the abnormalities is high"), the failure cause identifying system 150 extracts the number of objective variables (combinations of a node and a metric) common to the individual explanatory variables (combinations of a node and a metric) of the objective variable for which the abnormality is detected. The failure cause identifying system 150 determines the priority order of investigation in descending order of the number of common objective variables if an abnormality is detected when the explanatory variable is set as the objective variable. The explanatory variable assigned the largest number of common objective variables is the leading candidate for the cause of the abnormality.

In FIG. 1, among the explanatory variables, the combination of a node and a metric "VM1 (121)·NW IO amount" has three common objective variables ("App1 (101)·response time", "App3·(103) response time", and "VM2 (122)·NW IO amount"). The failure cause identifying system 150 is able to determine that this explanatory variable ("VM1 (121)·NW IO amount") is assigned the largest number of common objective variables and thus is the leading candidate for the cause of the abnormality.

As described above, the failure cause identifying system 150 performs a failure cause identifying process based on the two concepts described above. Thus, the failure cause identifying system 150 may more appropriately rank the candidates for the cause of the abnormality.

### (System Configuration of Network System)

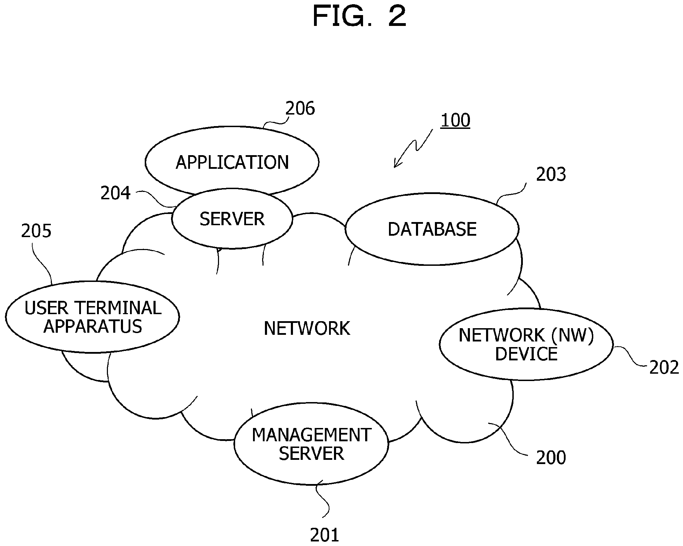

FIG. 2 is an explanatory diagram illustrating an example of a system configuration of a network system. In FIG. 2, the network system 100 that implements ICT infrastructure includes individual hardware apparatuses or hardware devices (hereinafter, referred to as "hardware apparatuses") such as a management server 201, a network device 202, a database 203, a server 204, and a user terminal apparatus 205, which are coupled to each other via a network 200. Various applications 206 are installed on the server 204.

The network 200 is, for example, a local area network (LAN), a wide area network (WAN) that is a wide area communication network, or the like. The communication form of the network 200 may be wired communication, may be wireless communication, or may be a mixture of wired communication and wireless communication.

The management server 201 is, for example, a hardware apparatus that manages a communication process performed over the network 200. The network device 202 is, for example, a hardware device that controls the flow of data communication. The network device 202 is, for example, a switch (SW), a router, or the like. The database 203 is, for example, a hardware apparatus that collects and accumulates information organized for easy search and accumulation. The server 204 is, for example, a computer (hardware apparatus) that provides a service or a function. The user terminal apparatus 205 is, for example, a computer (hardware apparatus) operated by a user.

Examples of operation data (metrics) of these hardware apparatuses (the management server 201, the network device 202, the database 203, the server 204, and the user terminal apparatus 205) may include "the central processing unit (CPU) usage", "the number of error events of a processor", "the length of an execution queue", "the memory usage", "the number of memory shortage error events", "the number of out of memory (OOM) killer events", "the swap usage", "the average reading/ writing waiting time", "the read amount/write amount", "the number of file system errors/disk errors", "the depth of an input/output (I/O) queue", "the length of a network driver queue", "the number of bytes received per second/the number of bytes transmitted per second/the number of packets per second", "the network device errors", and "the dropped packets".

The application 206 is, for example, a program (software) created in accordance with work of a user. Examples of the application 206 include a web application. The application 206 may include the containers 111 to 114, the virtual machines 121 and 122, and the like in addition to the applications 101 to 104 illustrated in FIG. 1.

Examples of the operation data (metrics) of a web application that is an example of the application 206 may include "the average page coupling time", "the average response time", "the number of interrupted transactions", "the number of http requests", and so on.

### (Hardware Configuration of Network System)

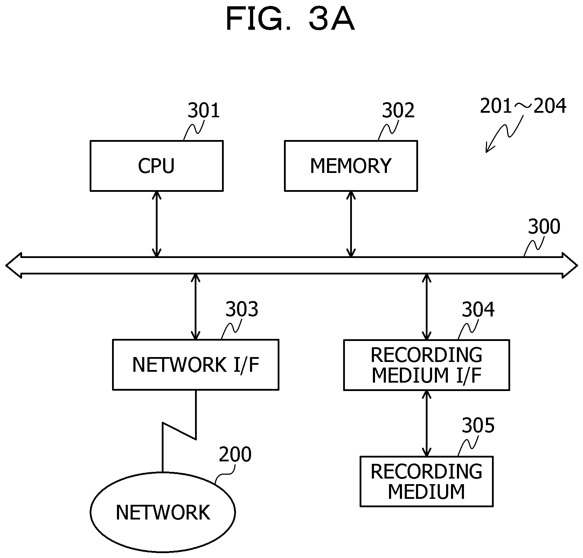

FIG. 3A is a block diagram illustrating an example of a hardware configuration of the management server, the network (NW) device, the database, and the server that constitute the network system. In FIG. 3A, each of the hardware apparatuses such as each of the management server 201, the network device 202, the database 203, and the server 204 includes a CPU 301, a memory 302, a network interface (I/F) 303, a recording medium I/F 304, and a recording medium 305. The individual constituents (the CPU 301, the memory 302, the network I/F 303, and the recording medium I/F 304) are coupled to one another via a bus 300.

The CPU 301 controls the entirety of the corresponding hardware apparatus. The memory 302 includes, for example, a read-only memory (ROM), a random access memory (RAM), a flash ROM, and the like. For example, the flash ROM or the ROM stores various programs, and the RAM is used as a work area of the CPU 301. A program stored in the memory 302 is loaded by the CPU 301 and causes the CPU 301 to execute coded processing. Thus, for example, the server 204 is able to execute the application 206 installed on the server 204.

The network I/F 303 is coupled to the network 200 through a communication line and is coupled to other apparatuses (for example, the other hardware apparatuses among the management server201, the network device 202, the database 203, the server 204, the user terminal apparatus 205, and the like) via the network 200. The network I/F 303 functions as an interface between the network 200 and the inside of the apparatus, and controls input and output of data to and from the other apparatuses. As the network I/F 303, for example, a modem, a LAN adapter, or the like may be adopted.

The recording medium I/F 304 controls reading/writing of data from/to the recording medium 305 under control of the CPU 301. The recording medium 305 stores data written thereon under control of the recording medium I/F 304. Examples of the recording medium 305 include a magnetic disk, an optical disk, and so on.

The hardware apparatuses such as the management server 201, the network device 202, the database 203, the server 204, and the user terminal apparatus 205 may include, for example, a solid state drive (SSD), a keyboard, a pointing device, a display, and so on (which are not illustrated) in addition to the above-described constituents such as the CPU 301, the memory 302, the network I/F 303, the recording medium I/F 304, and the recording medium 305.

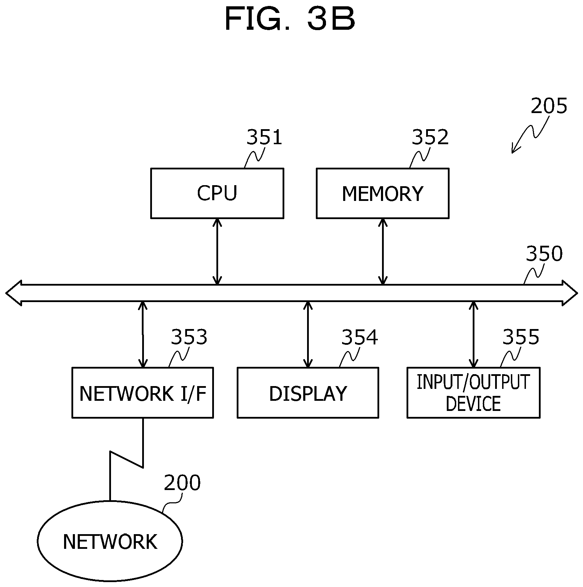

FIG. 3B is a block diagram illustrating an example of a hardware configuration of the user terminal apparatus that constitutes the network system. In FIG. 3B, the user terminal apparatus 205 includes a CPU 351, a memory 352, a network I/F 353, a display 354, and an input/output device 355. The individual constituents (the CPU 351, the memory 352, the network I/F 353, the display 354, and the input/output device 355) are coupled to one another via a bus 350.

Similarly to the CPU 301 illustrated in FIG. 3A, the CPU 351 controls the entirety of the user terminal apparatus 205. Similarly to the memory 302 illustrated in FIG. 3A, the memory 352 includes, for example, a ROM, a RAM, a flash ROM, and the like. For example, the flash ROM or the ROM stores various programs, and the RAM is used as a work area of the CPU 351. A program stored in the memory 352 is loaded by the CPU 351 and causes the CPU 351 to execute coded processing.

Similarly to the network I/F 303 illustrated in FIG. 3A, the network I/F 353 is coupled to the network 200 through a communication line and is coupled to other apparatuses (for example, the other hardware apparatuses such as the management server 201, the network device 202, the database 203, the server 204, and the like) via the network 200. The network I/F 353 functions as an interface between the network 200 and the inside of the apparatus, and controls input and output of data to and from the other apparatuses. As the network I/F 353, for example, a modem, a LAN adapter, or the like may be adopted.

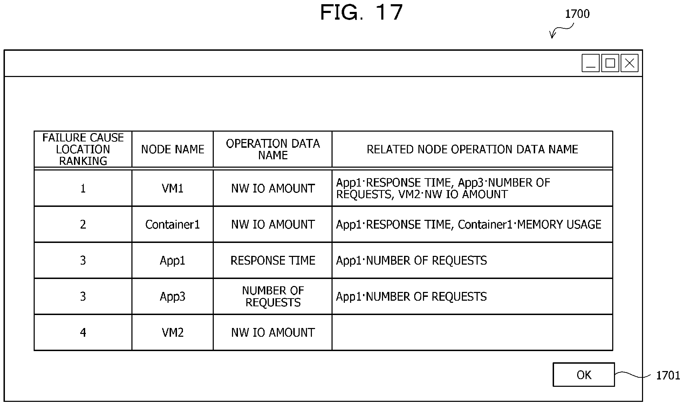

The display 354 displays not only a cursor, icons, and a tool box but also data such as documents, images, and functional information. As the display 354, for example, a liquid crystal display, an organic electroluminescence (EL) display, or the like may be adopted. The display 354 may display a display screen illustrated in FIG. 17 described later.

The input/output device 355 includes keys for inputting characters, numerals, various instructions, and so on, and inputs data. The input/output device 355 may be a keyboard, a pointing device such as a mouse, a touch-panel-type input pad, a numeric keypad, or the like. The input/output device 355 may be a printing apparatus such as a printer. The user terminal apparatus 205 may include, for example, an SSD, a hard disk drive (HDD), and so on in addition to the above-described constituents.

### (Functional Configuration of Failure Cause Identifying System)

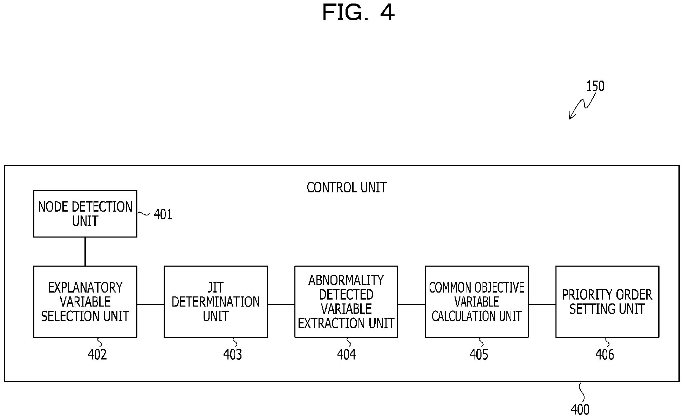

FIG. 4 is a block diagram illustrating an example of a functional configuration of the failure cause identifying system according to the embodiment. In FIG. 4, the failure cause identifying system 150 includes a control unit 400. The control unit 400 includes individual constituents such as a node detection unit 401, an explanatory variable selection unit 402, a JIT determination unit 403, an abnormality detected variable extraction unit 404, a common objective variable calculation unit 405, and a priority order setting unit 406.

Functions of the control unit 400 may be implemented by the hardware apparatuses of the network system 100 illustrated in FIG. 2. For example, the CPU 301 of the hardware apparatuses such as the management server 201, the network device 202, the database 203, and the server 204 illustrated in FIG. 3A executes a program stored in the memory 302 or the recording medium 305, so that the control unit 400 may implement the functions. Alternatively, the CPU 351 of the user terminal apparatus 205 illustrated in FIG. 3B executes a program stored in the memory 352, so that the control unit 400 may implement the functions. The control unit 400 may implement the functions of the individual constituents such as the node detection unit 401 to the priority order setting unit 406 by using any of the hardware apparatuses such as the management server 201 to the user terminal apparatus 205, for example, the management server 201 of the network system 100. The control unit 400 may implement the functions of the individual constituents such as the node detection unit 401 to the priority order setting unit 406 in a distributed manner by using the management server 201 and the hardware apparatuses, such as the network device 202 to the user terminal apparatus 205, other than the management server 201.

The node detection unit 401 extracts a related node that is related to a node in which an abnormality has occurred in the network system 100 including a plurality of nodes. The occurrence of an abnormality in a node may be detected by, for example, a monitoring program such as (an application monitoring program or a container monitoring program) of each node. The related node that is related to the node in which the abnormality has occurred may be extracted, for example, based on a determination result obtained by determining whether a communication path is coupled to the node in which the abnormality has occurred in the network system 100.

The explanatory variable selection unit 402 sets, as an "objective variable", each of combinations of the related node extracted by the node detection unit 401 and operation data (metric) of the related node. For example, suppose that two related nodes (a node A and a node B) are extracted and each of the related nodes has two metrics (a metric a and a metric b). In this case, four "objective variables" are set which are a combination 1 (the node A + the metric a), a combination 2 (the node A + the metric b), a combination 3 (the node B + the metric a), and a combination 4 (the node B + the metric b).

The explanatory variable selection unit 402 selects, as an explanatory variable of the objective variable, a combination usable as a prediction model for the objective variable from among the combinations other than the objective variable. For example, if the combination 1 is set as "objective variable", the combinations other than the objective variable are the combinations 2, 3, and 4 which serve as the "explanatory variables" of the objective variable. If the combination 2 is set as the "objective variable", the combinations 1, 3, and 4 serve as the "explanatory variables" of the objective variable. Similarly, if the "objective variable" = the "combination 3", the "explanatory variables" = the "combinations 1, 2, and 4". If the "objective variable" = the "combination 4", the "explanatory variables" = the "combinations 1, 2, and 3".

Only a combination usable as a prediction model is selected from among the explanatory variables of the objective variables. Selection based on the prediction model indicates that, for example, when each node is separated for each port, an explanatory variable in the related node at a port different from the port of the related node is excluded. As described above, selecting only a combination usable as the prediction model from among the explanatory variables may reduce the number of explanatory variables and may speed up the processing.

There is also a method of mechanically selecting an explanatory variable. For example, there may be a variable increase method in which a variable having a large contribution rate to the objective variable is sequentially added and the addition is stopped according to a certain rule; a variable decrease method in which, conversely to the variable increase method, a variable having a small single contribution rate to the objective variable is sequentially removed; a variable increase/decrease method in which these methods are combined; and so on.

The JIT determination unit 403 performs abnormality detection using the explanatory variable selected by the explanatory variable selection unit 402. This abnormality detection may be performed, for example, through JIT determination.

For example, the JIT determination unit 403 determines that an abnormality has occurred if a difference between a predicted value and an observed value of the objective variable (for example, an HTTP response delay or the like) is large. For example, first, observed values of the objective variable and the explanatory variable (for example, the number of HTTP requests or the like) are measured and stored. A prediction model of the objective variable is created from values of the explanatory variable in the past close to the observed value of the explanatory variable at the time of determination, and a predicted value and a variance of the predicted value are calculated. The JIT determination unit 403 determines an abnormality if the observed value deviates from the dispersion range (normal range) of the predicted value of the objective variable. In this manner, it may be determine whether an abnormality is actually occurring for each combination of a node and a metric.

The abnormality detected variable extraction unit 404 extracts an abnormality detected objective variable for which an abnormality is detected in the abnormality detection performed using the selected explanatory variable, and extracts the explanatory variables of the abnormality detected objective variable. For example, based on the result of the JIT determination performed by the JIT determination unit 403, the abnormality detected variable extraction unit 404 extracts, as an abnormality detected objective variable (objective variable for which an abnormality is detected), an objective variable corresponding to the combination of a node and a metric for which it is determined that an abnormality is actually occurring.

The abnormality detected variable extraction unit 404 may extract an abnormality undetected objective variable for which no abnormality is detected in the abnormality detection performed using the selected explanatory variable and may extract the explanatory variables of the abnormality undetected objective variable. For example, based on the result of the JIT determination performed by the JIT determination unit 403, the abnormality detected variable extraction unit 404 may extract, as an abnormality undetected objective variable (objective variable for which no abnormality is detected), an objective variable corresponding to the combination of a node and a metric for which it is determined that no abnormality is actually occurring.

The common objective variable calculation unit 405 calculates the number of objective variables common to the explanatory variables of the abnormality detected objective variable extracted by the abnormality detected variable extraction unit 404. For example, the common objective variable calculation unit 405 calculates how many objective variables other than the abnormality detected objective variable have, as the explanatory variable, the same combination as the combination of a node and a metric of the explanatory variable of the abnormality detected objective variable.

The common objective variable calculation unit 405 may calculate the number of objective variables common to the explanatory variables of the abnormality undetected objective variable extracted by the abnormality detected variable extraction unit 404. For example, the common objective variable calculation unit 405 may calculate how many objective variables other than the abnormality undetected objective variable have, as the explanatory variable, the same combination as the combination of a node and a metric of the explanatory variable of the abnormality undetected objective variable.

The priority order setting unit 406 sets the priority order for locations of the cause of the failure based on the number of objective variables calculated by the common objective variable calculation unit 405. For example, the priority order is set higher in descending order of the calculated number of objective variables among the explanatory variables of the abnormality detected objective variable. Therefore, the combination of the node and the metric which is the explanatory variable for which the calculated number of objective variables is the largest may be set as the leading candidate for the cause of the failure.

For example, the priority order setting unit 406 may set the priority order higher in descending order of the calculated number of objective variables among the explanatory variables of the abnormality undetected objective variable. The combination of the node and the metric for which the calculated number of objective variables is the largest may be ranked at a place subsequent to the lowest place in the priority order of the explanatory variables of the abnormality detected objective variables. In this manner, by setting the order of the candidates for the cause of the failure in consideration of not only the order of the abnormality detected objective variables but also the order of the abnormality undetected objective variables, the priority order may be made more appropriate.

The explanatory variable selection unit 402 described above may set, as the objective variable, each combination of a certain node and operation data of the certain node at a certain timing, select, as explanatory variables, combinations usable as a prediction model for the objective variable from among the combinations other than the objective variable, and store the selection result. The JIT determination unit 403 may perform abnormality detection using an explanatory variable based on the stored selection result in response to occurrence of an abnormality in a node included in the network system 100.

The certain timing may be, for example, at the time of booting of a node included in the network system 100 or at a timing when a certain time elapses after the booting. The certain timing may be a timing when the configuration of the network system 100 changes. The certain timing may be a timing when there is a trigger input by the user. As described above, by performing the explanatory variable selection process in advance before an abnormality occurs, the response may be made quickly to the occurrence of the abnormality.

The JIT determination unit 403 described above may perform the abnormality detection described above at a certain timing. This certain timing may be, for example, a periodic timing, or may be a timing when there is a trigger input by the user or a program.

The common objective variable calculation unit 405 described above may calculate a score obtained by multiplying the calculated number of objective variables by coefficients of the respective objective variables. This coefficient may be set based on, for example, the type of node, the type of metric, a history of past failures, and the like. This coefficient may be appropriately changed. The priority order setting unit 406 may set the priority order for the candidates for the cause of the failure, based on the score calculated by the common objective variable calculation unit 405. By appropriately tuning the calculation result obtained through the calculation process performed by the common objective variable calculation unit 405 in this manner, the priority order with higher accuracy may be set.

### (Node Detection Process by Node Detection Unit)

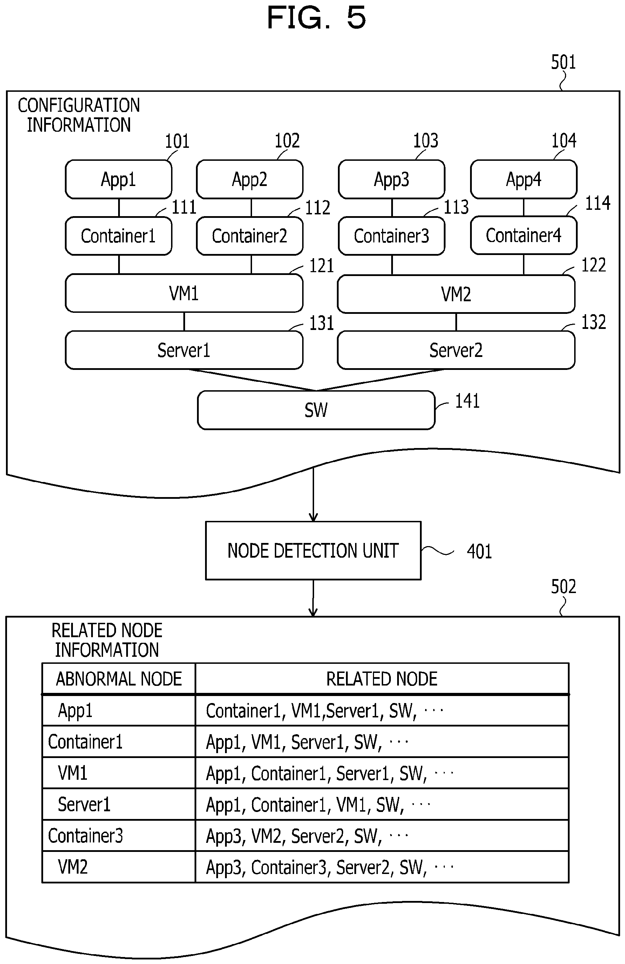

FIG. 5 is an explanatory diagram illustrating an example of a relationship between input data ("configuration information") and output data ("related node information") of the node detection unit. In FIG. 5, configuration information 501 stores, for example, information on the configurations of the network system 100. As illustrated in FIG. 5, the configuration information 501 includes, for example, a type of each node included in the network system 100, information on metrics of each node, and information on coupling statuses between nodes.

The nodes included in the network system 100 include, for example, the applications (App1 (101) to App4 (104)), the containers (Container1 (111) to Container4 (114)), the virtual machines (VM1 (121) and VM2 (122)), the servers (Server1 (131) and a Server2 (132)), and the switch (SW 141). Therefore, the nodes included in the network system 100 include both nodes implemented by hardware apparatuses and nodes implemented by software.

The applications (App1 (101) to App4 (104)) are, for example, programs in various business systems or the like, and, for example, programs for displaying an input screen or the like of a purchase system. The containers (Container1 (111) to Container4 (114)) are collections of application used in booting of the applications, libraries to be used, setting files, and the like. The virtual machines (VM1 (121) and VM2 (122)) are programs for implementing virtually created hardware.

Each of these nodes is a program or data installed on a hardware apparatus. Therefore, the network system 100 does not necessarily have the same configuration as the configuration information 501 illustrated in FIG. 5. For example, the network system 100 may have a configuration in which there is no VM, there is no container, or a container is placed on a VM and a VM is placed thereon.

The servers (Server1 (131) and Server2 (132)) are hardware apparatuses such as the management server 201, the database 203, the server 204, and the user terminal apparatus 205 that constitute the network system 100 illustrated in FIG. 2. The switch (SW 141) is a hardware apparatus such as the network device 202 that constitutes the network system 100 illustrated in FIG. 2.

The node detection unit 401 identifies a node in which an abnormality has occurred. With reference to the configuration information 501, the node detection unit 401 extracts nodes related to the identified node. For example, as illustrated in FIG. 1, when App1 (101) is identified as a node in which an abnormality has occurred, the node detection unit 401 extracts, with reference to the configuration information 501, the Container1 (111), the VM1 (121), the Server1 (131), and the SW (141) as related nodes related to the App1 (101).

Similarly, when the VM1 (121) is identified as a node in which an abnormality has occurred, the node detection unit 401 extracts, with reference to the configuration information 501, the App1 (101), the Container1 (111), the Server1 (131), and the SW (141) as related nodes related to the VM1 (121). Similarly, when the Container3 (113) is identified as a node in which an abnormality has occurred, the node detection unit 401 extracts, with reference to the configuration information 501, the App3 (103), the VM2 (122), the Server2 (132), and the SW (141) as related nodes related to the Container3 (113).

The node detection unit 401 extracts related nodes in the similar manner for the other nodes (the Container1(111), the Server1 (131), and the VM2 (122)) in which an abnormality has occurred. As described above, the node detection unit 401 extracts a node related to each node in which an abnormality has occurred, creates related node information 502, and outputs or stores the related node information 502.

The related node information 502 stores information on a node in which an abnormality has occurred and information on nodes related to the node in which the abnormality has occurred. For example, the related node information 502 includes information on a node in which an abnormality has occurred and information on nodes related to the node in which the abnormality has occurred. Although illustration is omitted, the related node information 502 may include metric information of each node.

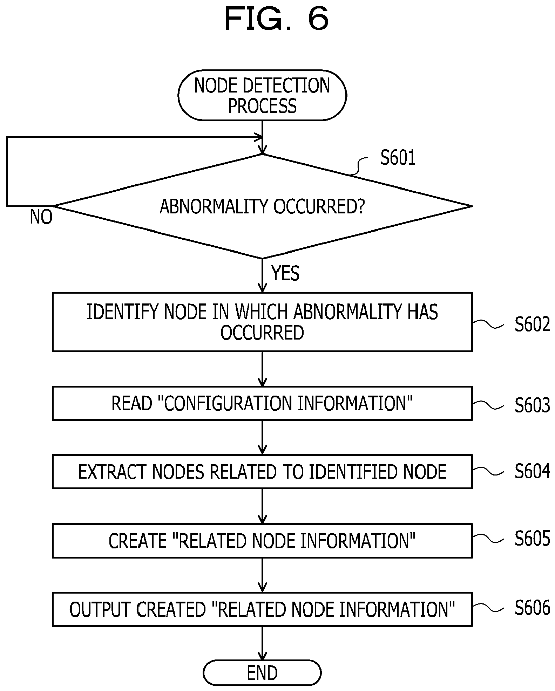

FIG. 6 is a flowchart illustrating an example of a procedure of a node detection process. In the flowchart of FIG. 6, the node detection unit 401 first determines whether an abnormality has occurred in the system (step S601). The node detection unit 401 waits for the occurrence of an abnormality (step S601: No). If an abnormality occurs (step S601: Yes), the node detection unit 401 identifies a node in which the abnormality has occurred (step S602).

The node detection unit 401 reads the configuration information 501(step S603), and extracts, based on the read configuration information 501, nodes related to the node identified in step S602 (step S604). Based on the extracted nodes, the node detection unit 401 creates the related node information 502 (step S605). The node detection unit 401 outputs (or stores) the created related node information 502 (step S606), and ends the series of processing.

### (Explanatory Variable Selection Process by Explanatory Variable Selection Unit)

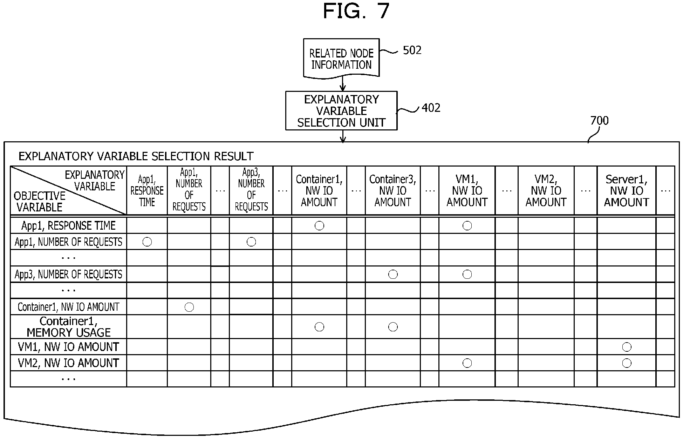

FIG. 7 is an explanatory diagram illustrating an example of a relationship between input data ("related node information") and output data ("explanatory variable selection result") of the explanatory variable selection unit. In FIG. 7, the related node information 502 is the related node information 502 created and output (stored) by the node detection unit 401 in FIG. 5.

With reference to the related node information 502, the explanatory variable selection unit 402 first sets, as an objective variable, a combination of the node extracted by the node detection unit 401 and each metric of the node. The metric differs from node to node. As illustrated in FIG. 1, the metrics of the application are, for example, the response time, the number of requests, and so on. The metrics of the container, the VM, and the server are, for example, the core usage time, the memory usage time, the disk IO amount, the NW IO amount, and the like. Detailed information on the metrics will be described later.

Secondly, the explanatory variable selection unit 402 sets, as explanatory variables, combinations other than the combination of the node and the metric set as the objective variable. For example, when a combination of the "App1 (101)" that is a node and the "response time" that is a metric of the "App1 (101)" is set as an objective variable, the explanatory variable selection unit 402 sets, as explanatory variables, combinations such as "App1 (101)·number of requests", "App3 (103)-number of requests", "Container1 (111)·NW IO amount", "Container3-(113) NW IO amount", "VM1 (121)-NW IO amount", "VM2 (122)-NW IO amount", and "Server1 (131)-NW IO amount" that are combinations other than the combination "App1 (101) response time" set as the objective variable.

The explanatory variable selection unit 402 thirdly selects explanatory variables usable as a prediction model for each objective variable, and creates and stores an explanatory variable selection result 700. The explanatory variable selection result 700 stores a selection result of the explanatory variables selected by the explanatory variable selection unit 402. In the explanatory variable selection result 700 illustrated in FIG. 7, the objective variables identified firstly by the explanatory variable selection unit 402 are presented in the column direction (overlapping objective variables are deleted), and the explanatory variables identified secondly by the explanatory variable selection unit 402 are presented in the row direction.

The explanatory variables selected thirdly by the explanatory variable selection unit 402 are indicated with "○". For example, the explanatory variables used as the prediction model for the objective variable "App1 (101)·response time" are two explanatory variables "Container1(111) NW IO amount" and "VM1 (121)·NW IO amount". The explanatory variables used as the prediction model for the objective variable "App1 (101)·number of requests" are two explanatory variables "App1 (101)·response time" and "App3 (103)·number of requests".

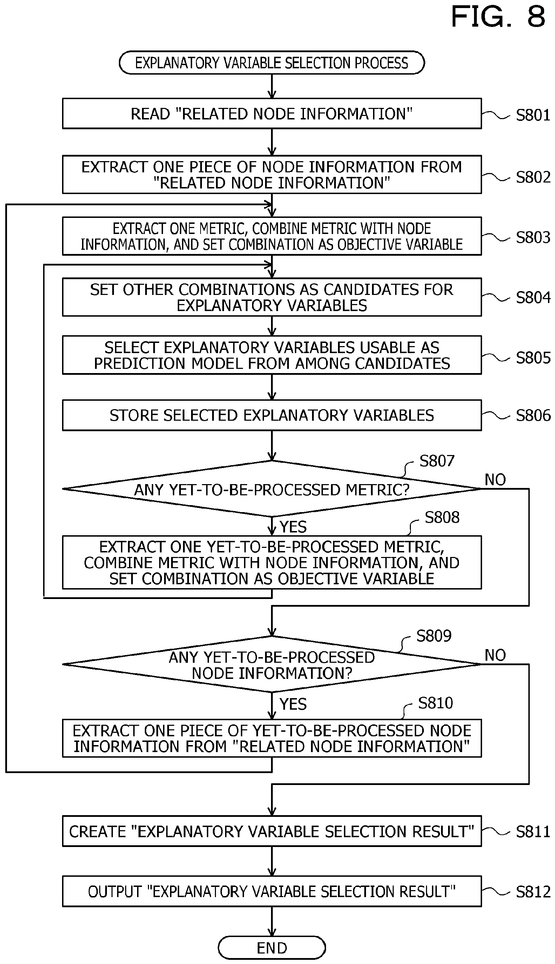

FIG. 8 is a flowchart illustrating an example of a procedure of an explanatory variable selection process. In FIG. 8, the explanatory variable selection unit 402 first reads the related node information 502 (step S801). The explanatory variable selection unit 402 extracts one piece of node information from the read related node information 502 (step S802). The explanatory variable selection unit 402 extracts one metric from the extracted node information, and sets, as an objective variable, a combination of the extracted piece of node information and the metric (step S803). The explanatory variable selection unit 402 sets combinations other than the combination of the extracted piece of node information and the metric, as candidates for the explanatory variables (step S804). The explanatory variable selection unit 402 selects explanatory variables usable as the prediction model from among the candidates (step S805), and stores the selected explanatory variables (step S806).

The explanatory variable selection unit 402 determines whether there is a yet-to-be-processed metric in the extracted piece of node information (step S807). If there is a yet-to-be-processed metric (step S807: Yes), the explanatory variable selection unit 402 extracts one yet-to-be-processed metric, combines the metric with the node information, and set the combination as an objective variable (step S808). Thereafter, the process returns to step S804, and the processing of steps S804 to S808 is repeatedly performed.

If there is no yet-to-be-processed metric in step S807 (step S807: No), the explanatory variable selection unit 402 then determines whether there is yet-to-be-processed node information in the related node information (step S809). If there is yet-to-be-processed node information (step S809: Yes), the explanatory variable selection unit 402 extracts one piece of yet-to-be-processed node information from the related node information (step S810). Thereafter, the process returns to step S803, and the processing of steps S803 to S810 is repeatedly performed.

On the other hand, if there is no yet-to-be-processed node information in step S809 (step S809: No), the explanatory variable selection unit 402 creates the explanatory variable selection result 700, based on the stored explanatory variables (step S811). The explanatory variable selection unit 402 outputs (or stores) the created explanatory variable selection result 700 (step S812), and ends the series of processing.

### (JIT Determination Process by JIT Determination Unit)

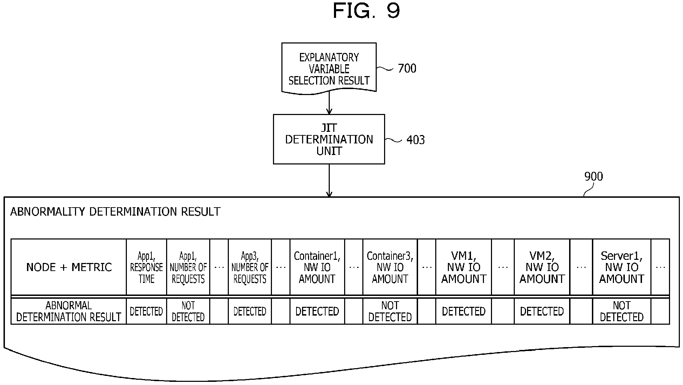

FIG. 9 is an explanatory diagram illustrating an example of a relationship between input data ("explanatory variable selection result") and output data ("abnormality determination result") of the JIT determination unit. In FIG. 9, the explanatory variable selection result 700 is the explanatory variable selection result 700 created and output (stored) by the explanatory variable selection unit 402 in FIG. 7.

The JIT determination unit 403 determines an abnormality of each metric by using the just-in-time abnormality detection method described above. Based on the determination result, the JIT determination unit 403 creates and outputs (or stores) an abnormality determination result 900. The abnormality determination result 900 stores an abnormality determination result obtained by the JIT determination unit 403 for each combination of the node and the metric. In the abnormality determination result 900 illustrated in FIG. 9, a combination of the node and the metric that is determined to be abnormal as a result of the abnormality determination is indicated by "DETECTED", and a combination of the node and the metric that is not determined to be abnormal is indicated by "NOT DETECTED". For example, in the abnormality determination result 900, the combinations of the node and the metric "App1 (101)·response time", "App3 (103)-number of requests", "Container1 (111)·NW IO amount", "VM1 (121)-NW IO amount", and "VM2 (122)-NW IO amount" are indicated by "DETECTED". This indicates that these combinations of the node and the metric are determined to be abnormal.

On the other hand, in the abnormality determination result 900, the combinations of the node and the metric "App1 (101)·number of requests", "Container3 (113)-NW IO amount", and "Server1 (131)-NW IO amount" are indicated by "NOT DETECTED". This indicates that these combinations of the node and the metric are determined to be normal.

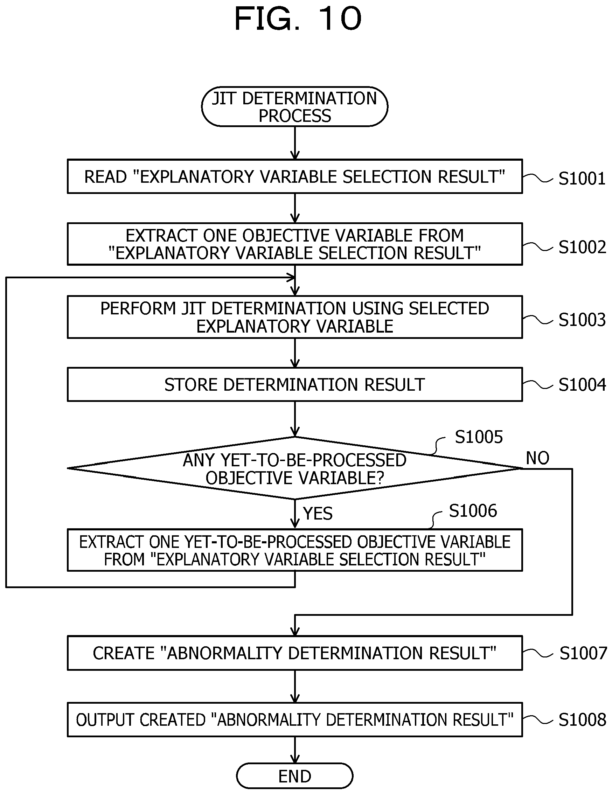

FIG. 10 is a flowchart illustrating an example of a procedure of a JIT determination process. In the flowchart of FIG. 10, the JIT determination unit 403 first reads the explanatory variable selection result 700 (step S1001). The JIT determination unit 403 extracts one objective variable from the read explanatory variable selection result 700 (step S1002). The JIT determination unit 403 performs JIT determination using the selected explanatory variable (S1003) and stores the determination result (step S1004).

The JIT determination unit 403 determines whether there is a yet-to-be-processed objective variable in the explanatory variable selection result 700 (step S1005). If there is a yet-to-be-processed objective variable (step S1005: Yes), the JIT determination unit 403 extracts one yet-to-be-processed objective variable from the explanatory variable selection result 700 (step S1006). The process then returns to step S1003. Thereafter, the processing of steps S1003 to S1006 is repeatedly performed.

On the other hand, if there is no yet-to-be-processed objective variable in step S1005 (step S1005: No), the JIT determination unit 403 creates the abnormality determination result 900 based on the stored determination results (step S1007). The JIT determination unit 403 outputs (or stores) the created abnormality determination result 900 (step S1008), and ends the series of processing.

(Abnormality Detected Variable Extraction Process by Abnormality Detected Variable Extraction Unit)

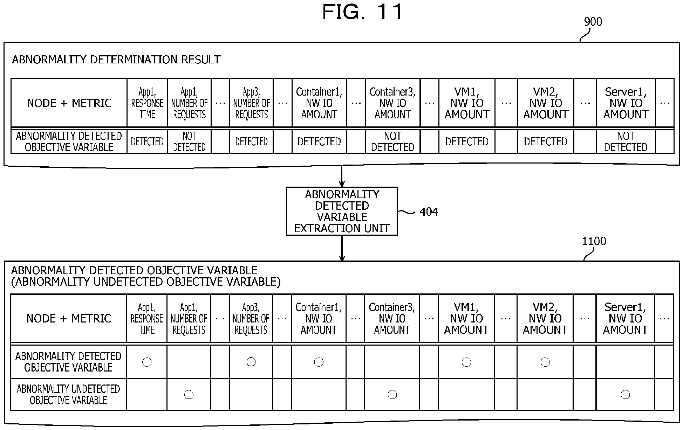

FIG. 11 is an explanatory diagram illustrating an example of a relationship between input data ("abnormality determination result") and output data ("abnormality detected objective variable") of the abnormality detected variable extraction unit. In FIG. 11, the abnormality determination result 900 is the abnormality determination result 900 created and output (stored) by the JIT determination unit 403 in FIG. 9.

The abnormality detected variable extraction unit 404 extracts, based on the abnormality determination result 900, an abnormality detected objective variable 1100 and the explanatory variables of the abnormality detected objective variable 1100. For example, the abnormality detected variable extraction unit 404 extracts combinations of the node and the metric "App1 (101)-response time", "App3 (103)-number of requests", "Container1 (111)·NW IO amount", "VM1 (121)-NW IO amount", and "VM2 (122)-NW IO amount", which are determined to be abnormal and are indicated by "DETECTED" in the abnormality determination result 900, and identifies the extracted combinations as the explanatory variables of the abnormality detected objective variable.

The abnormality detected variable extraction unit 404 may extract combinations of the node and the metric "App1 (101)·number of requests", "Container3 (113)-NW IO amount", and "Server1 (131)-NW IO amount", which are determined to be normal and are indicated by "NOT DETECTED" in the abnormality determination result 900 and identify the extracted combinations as explanatory variables of the abnormality undetected objective variable. The abnormality detected variable extraction unit 404 creates and outputs the abnormality detected objective variable 1100, based on the identified" objective variable for which an abnormality is detected (abnormality detected objective variable)" and the identified "objective variable for which no abnormality is detected (abnormality undetected objective variable).

In the abnormality detected objective variable 1100 illustrated in FIG. 11, among combinations of a node and a metric, combinations of the node and the metric that are identified as the abnormality detected objective variable are indicated by "○" in the "abnormality detected objective variable" field. For example, the combinations of the node and the metric "App1 (101)·response time", "App3 (103)-number of requests", "Container1 (111)·NW IO amount", "VM1 (121)-NW IO amount", and "VM2 (122)-NW IO amount" are indicated by "○". Among the combinations of the node and the metric, combinations of the node and the metric that are identified as the objective variable for which no abnormality is detected are indicated by "○" in the "abnormality undetected objective variable" field. For example, the combinations of the node and the metric "App1 (101)·number of requests", "Container3 (113)·NW IO amount", and "Server1 (131)-NW IO amount" are indicated by "○".

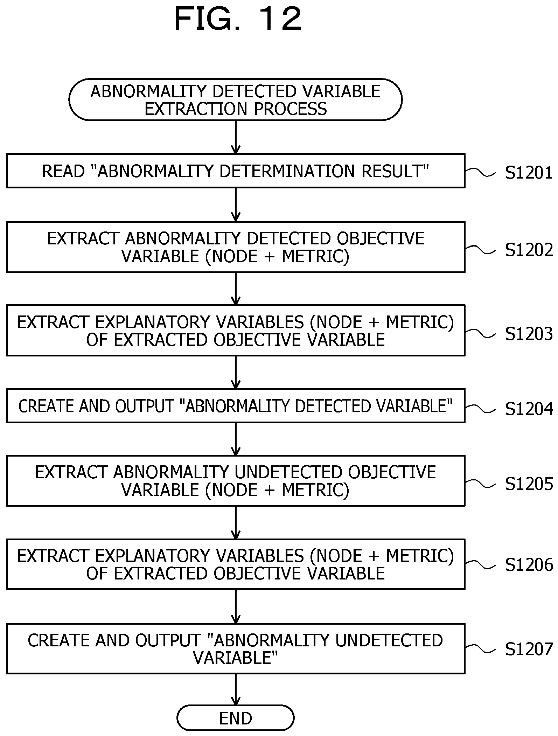

FIG. 12 is a flowchart illustrating an example of a procedure of an abnormality detected variable extraction process. In FIG. 12, the abnormality detected variable extraction unit 404 first reads the abnormality determination result 900 (step S1201). The abnormality detected variable extraction unit 404 extracts the abnormality detected objective variable (combination of the node and the metric) from the read abnormality determination result 900 (step S1202). The abnormality detected variable extraction unit 404 extracts explanatory variables (combinations of the node and the metric) of the extracted objective variable (step S1203). The abnormality detected variable extraction unit 404 creates and outputs (or stores) the extracted variables as abnormality detected variables (step S1204). As the abnormality detected variable extraction process, the series of processing may be ended here.

Alternatively, the process may be further continued, and the abnormality detected variable extraction unit 404 extracts the abnormality undetected objective variable (combination of the node and the metric) from the read abnormality determination result 900 (step S1205). The abnormality detected variable extraction unit 404 extracts the explanatory variables (combinations of the node and the metric) of the extracted objective variable (step S1206). The abnormality detected variable extraction unit 404 creates and outputs (or stores) the extracted variables as abnormality undetected variables (step S1207). Then, the series of processing of the abnormality detected variable extraction process may be ended.

### (Common Objective Variable Calculation Process)

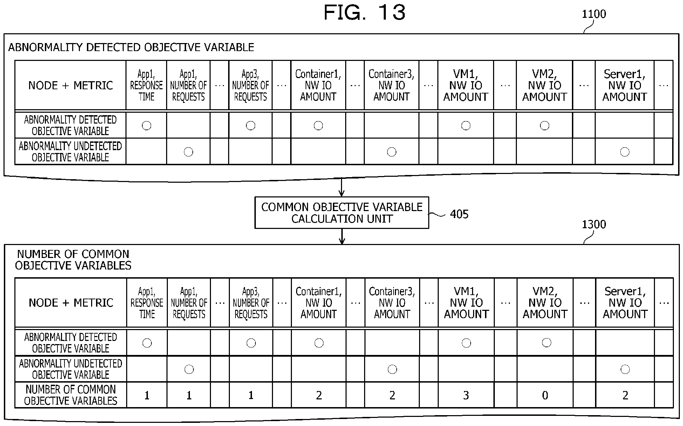

FIG. 13 is an explanatory diagram illustrating an example of a relationship between input data ("abnormality detected objective variable") and output data ("number of common objective variables") of the common objective variable calculation unit. In FIG. 13, the abnormality detected objective variable 1100 is the abnormality detected objective variable 1100 created and output (stored) by the abnormality detected variable extraction unit 404 in FIG. 11. Although illustration is omitted, the abnormality detected objective variable 1100 may include information on the explanatory variable selection result 700 illustrated in FIG. 7.

The common objective variable calculation unit 405 extracts the number of objective variables common to each of the explanatory variables of the abnormality detected objective variable. For example, as understood from the explanatory variable selection result 700 illustrated in FIG. 7, the number of objective variables common to "App1 (101)·response time" which is the explanatory variable (combination of the node and the metric) of the abnormality detected objective variable is one (App1 (101)·number of requests). Likewise, as understood from the explanatory variable selection result 700 illustrated in FIG. 7, the number of objective variables common to "App3 (103)·number of requests" which is an explanatory variable (combination of the node and the metric) of the abnormality detected objective variable is one ("App1 (101)·number of requests"). Therefore, "1" is set in the corresponding fields of the number of common objective variables 1300 illustrated in FIG. 13.

Likewise, as understood from the explanatory variable selection result 700 illustrated in FIG. 7, the number of objective variables common to "Container1 (111)·NW IO amount" which is the explanatory variable (combination of the node and the metric) of the abnormality detected objective variable are two ("App1 (101)·response time", and "Container1 (111)·memory usage"). Therefore, "2" is set in the corresponding field of the number of common objective variables 1300 illustrated in FIG. 13.

Likewise, as understood from the explanatory variable selection result 700 illustrated in FIG. 7, the number of objective variables common to "VM1 (121)·NW IO amount" which is an explanatory variable (combination of the node and the metric) of the abnormality detected objective variable are three ("App1 (101)·response time", "App3 (103)·number of requests", and "VM2 (122)·NW IO amount"). Therefore, "3" is set in the corresponding field of the number of common objective variables 1300 illustrated in FIG. 13.

Likewise, as understood from the explanatory variable selection result 700 illustrated in FIG. 7, there is no objective variable common to "VM2 (302)·NW IO amount" which is the explanatory variable (combination of the node and the metric) of the abnormality detected objective variable. Therefore, "0" is set in the corresponding field of the number of common objective variables 1300 illustrated in FIG. 13.

The common objective variable calculation unit 405 may extract the number of objective variables common to each of the explanatory variables of the abnormality undetected objective variable. For example, as understood from the explanatory variable selection result 700 illustrated in FIG. 7, the number of objective variables common to "App1 (101)·number of requests" which is the explanatory variable (combination of the node and the metric) of the abnormality undetected objective variable is one. Similarly, the number of objective variables common to "Container3 (113)·NW IO amount" is two, and the number of objective variables common to "Server1 (131)-NW IO amount" is two. Therefore, "1", "2", and "2" are set in the corresponding fields of the number of common objective variables 1300 illustrated in FIG. 13. In this way, the common objective variable calculation unit 405 creates and outputs the number of common objective variables 1300.

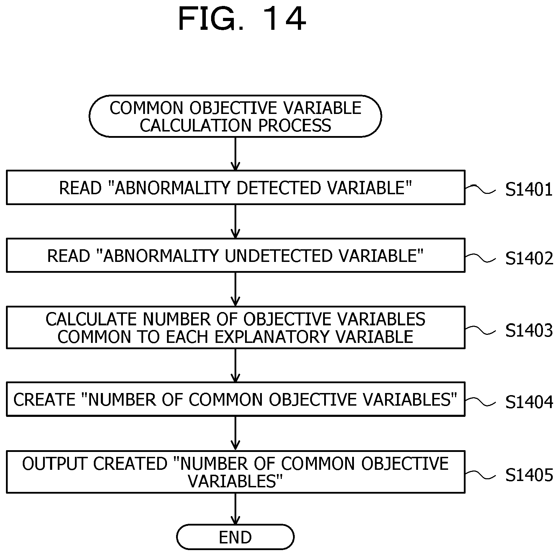

FIG. 14 is a flowchart illustrating an example of a procedure of a common objective variable calculation process. In FIG. 14, the common objective variable calculation unit 405 reads the abnormality detected variables (step S1401). Next, if there are abnormality undetected variables, the common objective variable calculation unit 405 reads the abnormality undetected variables (step S1402). Then, the common objective variable calculation unit 405 calculates the number of objective variables common to each explanatory variable (step S1403). The common objective variable calculation unit 405 creates, using the calculated number, the number of common objective variables 1300 (step S1404), outputs (or stores) the created number of common objective variables 1300 (step S1405), and ends the series of processing.

### (Priority Order Setting Process)

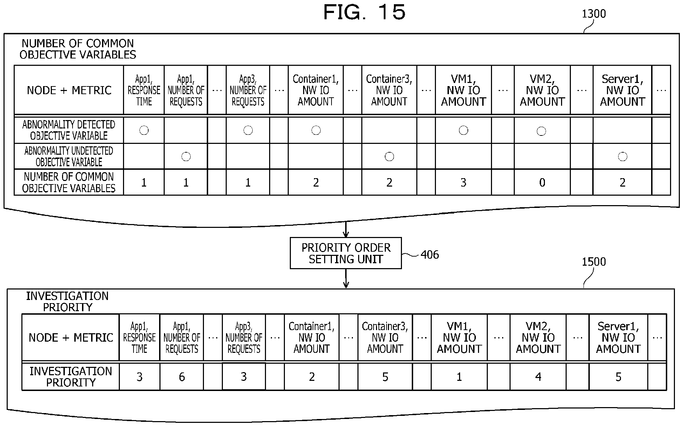

FIG. 15 is an explanatory diagram illustrating an example of a relationship between input data ("number of common objective variables") and output data ("investigation priority") of the priority order setting unit. In FIG. 15, the number of common objective variables 1300 is the number of common objective variables 1300 created and output (stored) by the common objective variable calculation unit 405 illustrated in FIG. 13.

If an abnormality is detected when the explanatory variable is set as the objective variable, the priority order setting unit 406 determines a priority order of the investigation in descending order of the number of common objective variables. For example, based on the number of common objective variables 1300, the priority order setting unit 406 first extracts a combination of the node and the metric corresponding to the abnormality detected objective variable.

For example, the priority order setting unit 406 extracts, from the number of common objective variables 1300, "App1 (101)·response time", "App3 (103)-number of requests", "Container1 (111)·NW IO amount", "VM1 (121)-NW IO amount", and "VM2 (122)·NW IO amount" which are five combinations of the node and the metric corresponding to the abnormality detected objective variables. The priority order setting unit 406 compares the numbers of common objective variables for the respective combinations of the node and the metric with each other. Among these, "VM1 (121)·NW IO amount" assigned the largest number "3" is given the first place in the priority order. Therefore, "1" is set in the field corresponding to "VM1 (121)·NW IO amount" in an investigation priority 1500. This "1" indicates the first place in the priority order.

"Container1 (111)·NW IO amount" assigned the second largest number "2" in given the second place in the priority order. Therefore, "2" is set in the corresponding field of the investigation priority 1500. Likewise, "App1 (101)·response time" and "App3 (103)·number of requests" assigned the third largest number "1" are given the third place in the priority order. Therefore, "3" is set in the corresponding field of the investigation priority 1500. Likewise, "VM2 (122)·NW IO amount" having the number of common objective variables of "0" is set as the fourth place in the priority order, and "4" is set in the corresponding field of the investigation priority 1500.

The priority order setting unit 406 extracts, based on the number of common objective variables 1300, combinations of the node and the metric for which no abnormality is detected when the explanatory variable is set as the objective variable. For example, the priority order setting unit 406 extracts, from the number of common objective variables 1300, three combinations "App1 (101)·number of requests", "Container3 (113)·NW IO amount", and "Server1 (131)-NW IO amount".

The priority order setting unit 406 compares the numbers of common objective variables for the respective combinations of the node and metric with each other. Among these, an abnormality is detected for "Container3 (113)·NW IO amount" and "Server1 (131)·NW IO amount" assigned the largest number "2", and these combinations are given the fifth place in the priority order following "VM2 (122)·NW IO amount" given the fourth place in the priority order that is the lowest place in the descending order of the number of common objective variables. Therefore, "5" is set in the corresponding fields for "Container 3 (113)·NW IO amount" and "Server1 (131)·NW IO amount" of the investigation priority 1500. This "5" indicates the fifth place in the priority order.

Likewise, "App1 (101)·number of requests" assigned the number of common objective variables "1" is given the sixth place in the priority order. Therefore, "6" is set in the field corresponding to "App1 (101)·number of requests" in the investigation priority 1500.

In this way, the priority order setting unit 406 creates and outputs the investigation priority 1500 in which the investigation priority order is set. Regarding the priority order, the investigation priority order may be given in the descending order of the number of common objective variables when an abnormality is detected (may be assigned the first to fourth places in the priority order). The range may be extended to combinations of a node and a metric for which no abnormality is detected, and the fifth and sixth places in the priority order may be given.

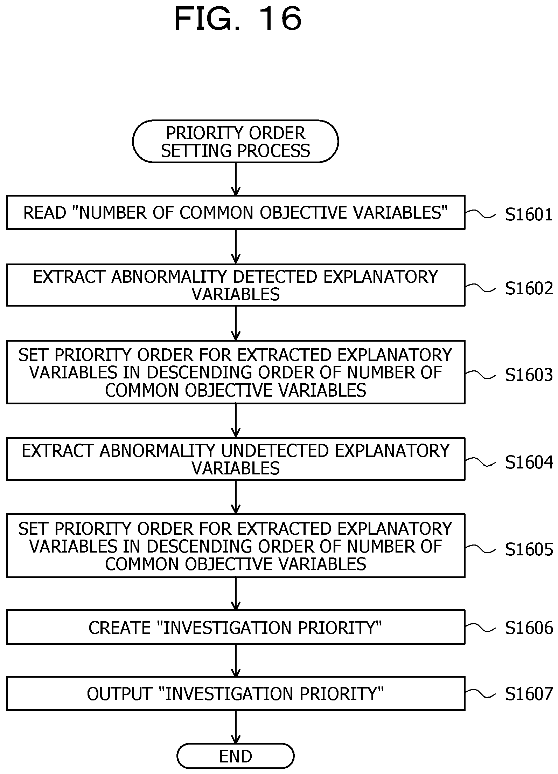

FIG. 16 is a flowchart illustrating an example of a procedure of a priority order setting process. In the flowchart of FIG. 16, the priority order setting unit 406 first reads the number of common objective variables 1300 (step S1601). The priority order setting unit 406 extracts, from the number of common objective variables 1300, explanatory variables for which an abnormality is detected (abnormality detection explanatory variables) (step S1602). The priority order setting unit 406 sets a priority order for the extracted abnormality detected explanatory variables in descending order of the number of common objective variables (step S1603).

The priority order setting unit 406 extracts, from the number of common objective variables 1300, explanatory variables for which no abnormality is detected (abnormality undetected explanatory variables) (step S1604). The priority order setting unit 406 sets a priority order for the extracted abnormality undetected explanatory variables in descending order of the number of common objective variables (step S1605). For example, the priority order following the priority order set in step S1603 is set.

The priority order setting unit 406 creates the investigation priority 1500, based on the set priority order (step S1606). The priority order setting unit 406 outputs (or stores) the created investigation priority (step S1607), and ends the series of processing.

### (Example of Display Screen)

FIG. 17 is an explanatory diagram illustrating an example of a display screen. In FIG. 17, a display screen 1700 presents, for example, display content that is displayed on the display 354 of the user terminal apparatus 205 illustrated in FIG. 3B. The display content of the display screen 1700 is created based on the content of the investigation priority 1500 created and output by the priority order setting unit 406. In this manner, the user may be easily informed of the rankings of locations of the cause of the failure.

In FIG. 17, in accordance with the priority order of the investigation priority 1500, the locations of the cause of the failure are displayed sequentially from the one ranked at the first place from the top. The content displayed in the display screen 1700 includes a node name of each of nodes serving as the locations of the cause of the failure, names of pieces of operation data that are metrics of the node, nodes related to the node and names of pieces of operation data of the related node as well as the failure cause location ranking.

In the display screen 1700, the combination of the node and the metric "VM1 (121)·NW IO amount" assigned the first place of the investigation priority in the investigation priority 1500 is at the first place in the ranking of the locations of the cause of the failure. As understood from the explanatory variable selection result 700 illustrated in FIG. 7, three combinations "App1 (101)·response time", "App3 (103)·number of requests", and "VM2 (122)·NW IO amount" which are objective variables of the explanatory variable "VM1 (121)-NW IO amount" are displayed as the nodes related to "VM1 (121)·NW IO amount" and the names of pieces of operation data. The same applies to the second and subsequent places in the failure cause location ranking.

The user may easily recognize the cause of the occurred failure by checking this display screen 1700. For example, the user may more efficiently find the location of the cause of the failure by performing a search from the top of the priority order. In response to an OK button 1701 being pressed, the display screen 1700 is hidden.

As described above, according to the present embodiment, in the control unit 400, the node detection unit 401 extracts a related node that is related to a node in which an abnormality has occurred in the network system 100 including a plurality of nodes, the explanatory variable selection unit 402 sets, as an objective variable, each of combinations of the extracted related node and operation data of the related node, and select, as an explanatory variable of the objective variable, a combination usable as a prediction model for the objective variable from among combinations other than the objective variable, the abnormality detected variable extraction unit 404 extracts an abnormality detected objective variable for which an abnormality is detected in abnormality detection performed by the JIT determination unit 403 using the selected explanatory variable, and extracts explanatory variables of the abnormality detected objective variable, the common objective variable calculation unit 405 calculates the number of objective variables common to each of the explanatory variables of the extracted abnormality detected objective variable, and the priority order setting unit 406 sets a priority order for locations of a cause of a failure, based on the calculated number of objective variables. Thus, the time taken for identifying the cause of the failure may be reduced, and operation of ICT infrastructure may be made efficient.

According to the present embodiment, the abnormality detected variable extraction unit 404 extracts an abnormality undetected objective variable for which no abnormality is detected in the abnormality detection and extracts explanatory variables of the abnormality undetected objective variable, the common objective variable calculation unit 405 calculates the number of objective variables common to each of the explanatory variables of the extracted abnormality undetected objective variable, and the priority order setting unit 406 sets a priority order for locations of a cause of a failure, based on the calculated number of objective variables. Thus, further detailed priority order for identifying the location in detail may be set.

According to the present embodiment, the JIT determination unit 403 performs the abnormality detection through just-in-time (JIT) determination. Thus, it may be more accurately determine whether an abnormality actually occurs.

According to the present embodiment, the JIT determination unit 403 performs the abnormality detection at a certain timing. Thus, an abnormality may be grasped a timing other than a timing of the occurrence of the abnormality, and the sound operation of each node of the network system may be ensured all the time.

According to the present embodiment, the common objective variable calculation unit 405 calculates a score obtained by multiplying the calculated number of common objective variables by coefficients of the respective objective variables. The priority order setting unit 406 sets the priority order for the locations of the cause of the failure based on the calculated score. Thus, the priority order with higher accuracy may be set.

According to the present embodiment, at a certain timing (for example, at the time of booting of the node included in the network system 100, at a timing when a certain time elapses after the booting, or at a timing when the configuration of the network system 100 changes), the explanatory variable selection unit 402 set, as the objective variable, each of combinations of a certain node and operation data of the certain node, select, as explanatory variables, combinations usable as a prediction model for the objective variable from among the combinations other than the objective variable, and store a result of the selection, and the JIT determination unit 403 performs the abnormality detection using an explanatory variable based on the stored result of the selection in response to occurrence of an abnormality in a node included in the network system 100. Thus, the abnormality may be coped with more quickly.

The failure cause identifying method described in the present embodiment may be implemented by executing a program prepared in advance on a computer such as a personal computer or a workstation. The failure cause identifying program is recorded on a computer-readable recording medium such as a hard disk, a flexible disk, a compact disc read-only memory (CD-ROM), a magneto-optical disk (MO), a digital versatile disc (DVD), a flash memory, or a Universal Serial Bus (USB) memory and is executed by a computer after being read from the recording medium. The failure cause identifying program may be distributed via a network such as the Internet.

## Claims

1. A failure cause identifying program that causes a computer to execute a process, the process comprising:
extracting a first node related to a node indicating abnormality included in a plurality of nodes;
identifying a first objective variable and a first explanatory variable of the first objective variable, the first objective variable being each of combinations of operation data of the first node and the first node;
extracting, in a detection process performed by using the first explanatory variable, a second objective variable and a second explanatory variable of the second objective variable, the second objective variable being each of combinations of the operation data and the node indicating abnormality;
determining a number of objective variables common to the second explanatory variable; and
setting a priority order for locations of a cause of a failure, based on the number of objective variables.

2. The failure cause identifying program according to claim 1, wherein the identifying includes
identifying, as the first explanatory variable, a combination usable as a prediction model for the first objective variable.

3. The failure cause identifying program according to claim 2, wherein the extracting includes:
extracting, as the second objective variable, an abnormality detected objective variable for which an abnormality is detected in abnormality detection performed by using the first explanatory variable, and
extracting, as the second explanatory variable, an explanatory variable of the abnormality detected objective variable.

4. The failure cause identifying program according to claim 1, wherein the extracting includes:
extracting, in the abnormality detection process, an objective variable which have not been detected for anomalies and an explanatory variable of the objective variable which have not been detected, and
identifying a number of objective variables common to the explanatory variable of the objective variable which have not been detected.

5. The failure cause identifying program according to claim 1, wherein the extracting includes
performing the abnormality detection process through just-in-time determination.

6. The failure cause identifying program according to claim 1, wherein the extracting includes
performing an abnormality detection at a certain timing.

7. The failure cause identifying program according to claim 1, wherein
the determining includes calculating a score that is a product of the identified number of objective variables and coefficients of the respective objective variables, and
the setting includes setting a priority order for locations of a cause of a failure, based on the calculated score.

8. A failure cause identifying apparatus comprising:
an extract unit configured to extract a first node related to a node indicating abnormality included in a plurality of nodes;
an identify unit configured to identify a first objective variable and a first explanatory variable of the first objective variable, the first objective variable being each of combinations of operation data of the first node and the first node;
an extract unit configured to extract, in a detection process performed by using the first explanatory variable, a second objective variable and a second explanatory variable of the second objective variable, the second objective variable being each of combinations of the operation data and the node indicating abnormality;
an identify unit configured to identify a number of objective variables common to the second explanatory variable; and
a set unit configured to set a priority order for locations of a cause of a failure, based on the number of objective variables.

9. A failure cause identifying method executed by a computer, the failure cause identifying method comprising:
extracting a first node related to a node indicating abnormality included in a plurality of nodes;
identifying a first objective variable and a first explanatory variable of the first objective variable, the first objective variable being each of combinations of operation data of the first node and the first node;
extracting, in a detection process performed by using the first explanatory variable, a second objective variable and a second explanatory variable of the second objective variable, the second objective variable being each of combinations of the operation data and the node indicating abnormality;
identifying a number of objective variables common to the second explanatory variable; and
setting a priority order for locations of a cause of a failure, based on the number of objective variables.
